Europäisches Patentamt

European Patent Office

Office européen des brevets

(11) Veröffentlichungsnummer: **0 411 434 A1**

# (12) EUROPÄISCHE PATENTANMELDUNG

(21) Anmeldenummer: 90114119.2

(22) Anmeldetag: 24.07.90

(51) Int. Cl.5: **A45C 11/18**

(30) Priorität: 04.08.89 DE 3925849

(43) Veröffentlichungstag der Anmeldung:
06.02.91 Patentblatt 91/06

(84) Benannte Vertragsstaaten:
AT BE CH DE DK ES FR GB GR IT LI LU NL SE

(71) Anmelder: Vogt, Werner
Lindenweg 3
CH-5453 Remetschwil(CH)

(72) Erfinder: Vogt, Werner
Lindenweg 3
CH-5453 Remetschwil(CH)

(74) Vertreter: Otte, Peter, Dipl.-Ing.
Tiroler Strasse 15
D-7250 Leonberg(DE)

(54) Flache Schutzhülle zur Aufnahme von Kreditkarten u. dgl., Verfahren zu ihrer Herstellung und Vorrichtung zur Durchführung des Verfahrens.

(57) Bei einer flachen Schutzhülle aus beidseitigen, einstückig miteinander verbundenen Kunststoffplatten zur Aufnahme mindestens einer Kreditkarte, Scheckkarte, Ausweiskarte, Automatenkarte u. dgl., auch solche mit Magnetstreifencode, mit einem Aufnahmeraum für die Karte, der an einer Stirnseite zur Ermöglichung der Karteneinführung völlig offen ist sowie mit einer Grifföffnung in mindestens einer der Platten, wird vorgeschlagen, die Schutzhülle (10) bei Wegfall von über ihre Flächen verteilten Öffnungen mindestens mit einer weiteren Randkantenöffnung (17) zu versehen zur Ermöglichung des Durchtritts einer Haltzunge als Teil eines den Aufnahmeraum beim Spritzvorgang ausfüllenden Schiebers des Spritzwerkzeugs zu dessen ausschließlicher Abstützung außerhalb der Schutzhülle (10).

## Fig.1

## Fig.2

EP 0 411 434 A1

# FLACHE SCHUTZHÜLLE ZUR AUFNAHME VON KREDITKARTEN U. DGL., VERFAHREN ZU IHRER HERSTELLUNG UND VORRICHTUNG ZUR DURCHFÜHRUNG DES VERFAHRENS

Stand der Technik

Die Erfindung geht aus von einer flachen Schutzhülle aus einem geeigneten Kunststoff, die zur Aufnahme von Kreditkarten, Scheckkarten, Identitätsausweisen u. dgl. vorzugsweise im üblichen Scheckkartenformat geeignet ist, nach dem Oberbegriff des Anspruchs 1, von einem Verfahren zur Herstellung einer solchen flachen Schutzhülle nach dem Oberbegriff des Anspruchs 6 sowie von einer Vorrichtung zur Durchführung des Herstellungsverfahrens nach dem Oberbegriff des Anspruchs 9 .

Flache rechteckige Schutzhüllen dieser Art aus einem biegesteifen Kunststoffmaterial mit einem zu einer Stirnseite der Schutzhülle offenen Aufnahmeraum für die einzuführende Karte sind bekannt (EP-PS 0 121 598).

Bei dieser bekannten Schutzhülle sind die beiden den Aufnahmeraum hauptsächlich bildenden Seiten, nämlich Ober- und Unterseite in Form einstückig miteinander verbundener Kunststoffplatten ausgebildet, zwischen denen dann der Aufnahmeraum gebildet ist.

Die sofort durch den Spritzvorgang gewährleistete Einstückigkeit der beiden Kunststoffplatten wird deshalb angestrebt, weil aus zwei Einzelspritzteilen hergestellte vergleichbare Schutzhüllen, bei denen dann die beiden Platten durch geeignete Schweiß-, Klebe- oder Einrastverbindungen miteinander verbunden sind, bei unsachgemäßem Gebrauch, beispielsweise starken Abbiegungen aufgehen, also sich voneinander lösen können.

Da andererseits aber eine völlige Biegefreiheit beim Gebrauch nicht erwartet werden kann, ist die Einstückigkeit des Herstellungsvorgangs sinnvoll, bedingt dann allerdings das Einführen eines entsprechend sorgfältig zentrierten Schiebers in den Spritzraum, in welchem das jeweilige Kunststoffmaterial eingespritzt wird. Die Zentrierung des Schiebers ist daher erforderlich, damit dieser bei den auftretenden Druckeinwirkungen beim Spritzvorgang nicht seitlich ausweicht und der Aufnahmeraum hierdurch unsymmetrisch wird oder die beiden, die Schutzhülle bildenden Platten nicht einwandfrei hergestellt werden können.

Daher wird bei dieser bekannten Schutzhülle (EP-PS 0 121 598) auch vorgeschlagen, in den beiden einstükig miteinander verbundenen Kunststoffplatten möglichst kleine und miteinander fluchtende Halteöffnungen für den Schieber des Spritzwerkzeugs vorzusehen, die mit dem Innenraum der Schutzhülle in Verbindung stehen, über die Fläche der Kunststoffplatten verteilt sind und in die paarweise Haltestifte des Spritzwerkzeugs eingeführt sind. Diese Haltestifte stützen dann den in den Spritzhohlraum eingeführten Schieber beidseitig ab und zentrieren diesen, so daß der Aufnahmeraum der Schutzhülle einwandfrei realisiert werden kann. Zwar muß die hierbei angegebene Maßnahme, daß die Haltestifte paarweise in die Halteöffnungen der Kunststoffplatten einführbar sind, als mit Bezug auf den Herstellungsvorgang verfrüht angesehen werden, denn durch die Haltestifte entstehen diese Halteöffnungen überhaupt erst, während sie an der fertigen Hülle keinem ersichtlichen Zweck mehr dienen.

Andererseits ergibt sich durch die Vielzahl der die beiden Kunststoffplattenseiten durchbrechenden Öffnungen (gegebenenfalls nicht weniger als sieben bis acht Öffnungen an jeder Platte, insgesamt also fünfzehn Öffnungen) ein durchbrochenes, gegebenenfalls auch als unschön empfundenes Aussehen der Schutzhülle.

Allgemein sind solche Schutzhüllen, dabei bestehend aus zwei miteinander in geeigneter Weise, also nicht von Anfang an einstückig verbundenen Kunststoffplatten ferner bekannt aus der US-PS 4 141 400 sowie den DE-GM 8 208 340 und 8 226 430.

Der vorliegenden Erfindung liegt die Aufgabe zugrunde, eine solche flache Schutzhülle für Kreditkarten, Scheckkarten u. dgl. in einstückiger Form und ohne Ober- und Unterseite durchbrechende Schlitze von gefälligem Aussehen auszubilden, deren Herstellung besonders einfach und unkompliziert ist.

Vorteile der Erfindung

Die Erfindung löst diese Aufgabe mit den kennzeichnenden Merkmalen des Hauptanspruchs bzw. den nebengeordneten Ansprüchen 6 und 9 und hat den Vorteil, daß die beiden Hauptflächen der Schutzhülle ohne irgendwelche Durchbrechungen, Stützöffnungen o.dgl. ausgebildet sind, also glatt verlaufend eine gefällige Form aufweisen, obwohl bei der Herstellung auch in diesem Falle mit entsprechend hohen Drücken beim Einspritzen des Kunststoffmaterials in die Form gerechnet werden muß, die den den Aufnahmeraum bildenden Schieber leicht aus seiner Position wegdrücken könnten.

Die Lösung dieser sich im Grunde widersprechenden Forderungen ist dadurch möglich, daß auf der der schmalen Stirnseite gegenüberliegenden Rückseite eine Öffnung vorgesehen ist, durch welche eine den Schieber des Spritzwerkzeugs am besten einstückig fortsetzende Zunge über die spätere Hüllenform hinausragt und im Spritzwerkzeug auf der gegenüberliegenden Seite eine entsprechende sichere Abstützung findet. Solche Zungen können aber auch seitlich am Schieber ansetzen.

Die Erfindung beruht daher auf der Erkenntnis, daß es nicht notwendig ist, gegenüberliegend der freien Einführungsöffnung der Hülle diese vollständig geschlossen oder nur mit schmalen Atmungsöffnungen auszuführen, sondern es ist durchaus möglich, eine entsprechend breit und auch den Durchtritt der Schieberzunge ermöglichende Öffnung vorzusehen, wenn diese nur so mit Bezug auf die Breite der Scheckkarte verengt bzw. schmaler ist, daß die in die Schutzhülle eingeführte Karte auf der Rückseite nicht wieder herausgedrückt werden kann.

Hierdurch ergeben sich auch Vorteile im Bereich des Spritzwerkzeugs, da dieses nicht nur nicht über in den eigentlichen Spritzraum hineinragende Haltestifte zu verfügen braucht, sondern der Spritzraum vollkommen frei von Fremdkörpern oder Kernen sein kann, bis auf den Schieber, der den Spritzraum von der einen Seite zur anderen durchsetzt und sich gegenüberliegend der Spritzraumform an einer geeigneten Aussparung mit seiner Schieberzunge abstützt.

In gleicher Weise vereinfacht sich das Herstellungsverfahren für eine solche Schutzhülle, da auf einen Zwischenschritt verzichtet werden muß, der bei der Herstellung darin besteht, daß nach dem Einfahren des Schiebers in den Spritzhohlraum und bevor der Kunststoff für die Schutzhülle jeweils eingespritzt werden kann, beidseitig des Schiebers zusätzlich beweglich gelagerte, für dessen präzise Zentrierung erforderliche Haltestifte einfahren und den Schieber beidseitig erfassen und für den Spritzvorgang positionieren. Erst dann kann der Kunststoff eingespritzt werden.

Alle diese Zwischenschritte entfallen bei vorliegender Erfindung, bei welcher nach dem Einfahren des Schiebers in den Spritzraum die aus zwei Teilen bestehende Form sofort geschlossen werden kann, wobei gleichzeitig die am (gegenüberliegenden Ende des) Schieber(s) angeordnete Zunge fest in der Form eingespannt und gehalten wird. Der Taktablauf bei der Herstellung ist daher verglichen mit dem bisherigen Herstellungsverfahren wesentlich schneller, wobei auch beim Öffnen der Form lediglich noch der Schieber zurückgezogen zu werden braucht und auch nicht die Gefahr besteht, daß die Haltestifte an der fertiggespritzten Schutzhülle irgendwie hängen bleiben oder diese beim Ausfahren beschädigen, da solche Haltestifte überhaupt nicht mehr erforderlich sind.

Durch die in den Unteransprüchen aufgeführten Maßnahmen sind vorteilhafte Weiterbildungen und Verbesserungen der Erfindung möglich. Besonders vorteilhaft ist die zusätzliche Anbringung einer seitlichen Kartenbremse, die am besten aus einem U-förmigen Einschnitt in dem Material einer der beiden Kunststoffplatten der Schutzhülle besteht, mit einer geringfügig abgebogenen nasenartigen Vorderkante, so daß sich auf die eingeführte Karte ein Brems- und Haltemoment ergibt. Dabei befindet sich die Vorderkante des Bremsausschnittes so weit an einer Randkante der Schutzhülle positioniert, daß auch bei wiederholtem Ein- und Ausfahren an dieser Stelle die jeweilige Scheck- oder Kreditkarte durch die verstärkte körperliche Einwirkung nicht beschädigt oder sonstwie verändert werden kann, da die Kreditkarte an dieser Stelle keine Markierungen oder sonstigen Beschriftungen oder Magnetstreifencodes aufweist.

Eine weitere vorteilhafte Ausgestaltung vorliegender Erfindung besteht darin, daß in den beiden flächigen Hauptseiten, also die Kunststoffplatten der Schutzhülle, mindestens auf einer Seite eine Grifföffnung vorgesehen ist, die jedoch so positioniert ist, daß diese nach hinten, also gegenüberliegend der Einführungs-Stirnöffnung offen ist und insofern in die Öffnung übergeht, die dem Durchtritt der Schieberzunge dient.

Hierdurch ergibt sich ein weiterer besonderer Vorteil, der darin besteht, daß sowohl das Einschieben als auch das Herausschieben der Kreditkarte aus einer solchen Schutzhülle besonders problemlos ist, denn die Bedienungsperson kann, beispielsweise wenn die jeweils in die Schutzhülle eingebrachte Scheckkarte, Kreditkarte o. dgl. aus dieser wieder herausgeschoben werden soll, am hinteren insofern freien Ende der Kreditkarte mit dem Daumen oder einem sonstigen Finger angreifen und die Scheckkarte einfach nach vorn herausschieben. Dies steht im Gegensatz zu den bisher üblichen geschlossenen Grifföffnungen, wo die Bedienungsperson versuchen muß, durch eine entsprechende Druckausübung auf die zugängliche Kartenoberfläche soweit eine kraftschlüssige Verbindung mit dieser zu erreichen, daß bei Bewegung des Daumens dann auch die Karte aus der Schutzhülle herausgleitet. Allerdings ergibt sich hierbei das Problem, daß bei immer stärkerem Druck natürlich auch die Karte auf die gegenüberliegende Seite der Schutzhülle verstärkt angepreßt wird, so daß sich gegeneinander arbeitende Wirkungen ergeben und nicht sicher ist, ob es überhaupt gelingt, die Scheckkarte wieder aus der Schutzhülle zu entnehmen; jedenfalls muß mit wesentlich größeren Bemühungen gerechnet werden als wenn man eine Scheckkarte einfach an ihrem hinteren Ende ohne jede sonstige Kraftausübung ergreifen und herausschieben kann, mit einem Widerstand, der lediglich durch die dimensionierbare Haltekraft der Bremse aufgebracht wird.

Zeichnung

Ein Ausführungsbeispiel der Erfindung ist in der Zeichnung dargestellt und wird in der nachfolgenden Beschreibung näher erläutert. Es zeigen:

Fig. 1 eine Draufsicht auf die Oberseite einer Ausführungsform einer Schutzhülle zur Aufnahme von einer oder mehreren Karten, falls gewünscht;

Fig. 2 eine Ansicht der Schutzhülle der Fig. 1 von links in der Zeichenebene und

Fig. 3 eine Ansicht der Schutzhülle der Fig. 1 in der Zeichenebene von rechts, während die

Fig. 4 einen Schnitt längs der Linie IV-IV der Fig.1 zeigt;

Fig. 5 zeigt stark schematisiert und perspektivisch eine mögliche Ausführungsform eines Spritzwerkzeugs, und zwar dessen linke Hälfte in geöffnetem Zustand, während die

Fig. 6 in ebenfalls perspektivisch-schematisierter Form die rechte Hälfte des Spritzwerkzeugs zeigt.

Beschreibung der Ausführungsbeispiele

Der Grundgedanke vorliegender Erfindung besteht darin, die an sich widersprüchlichen Forderungen der zentrischen Positionierung und Halterung des den Aufnahmeraum bildenden Schiebers mit der Forderung nach einer glatten ununterbrochenen Oberfläche auf beiden Seiten der Schutzhülle dadurch zu verbinden, daß man eine (einstückige) vorzugsweise vordere Zunge am Schieber aus dem in diesem Fall dann rückwärtigen Ende der Schutzhülle heraustreten läßt und so den Schieber auch auf der anderen Seite des Spritzwerkzeugs fixiert. Durch diese Halterung des Schiebers läßt sich die Schutzhülle in einem Durchgang einstückig und vor allen Dingen lochfrei spritzen.

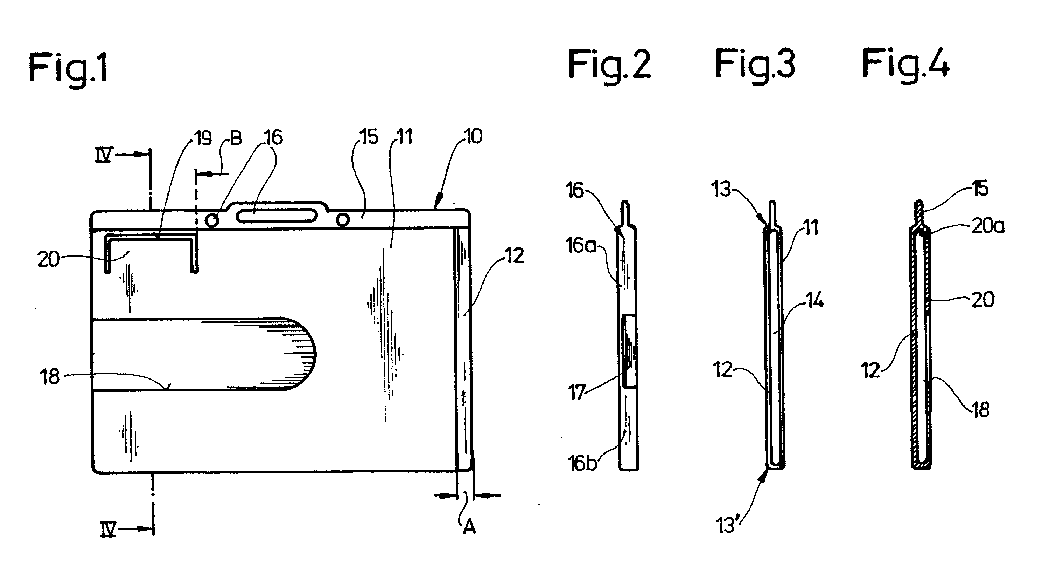

In Fig. 1 ist die Schutzhülle mit 10 bezeichnet; sie besteht aus einer Oberseite 11 und einer Unterseite 12, die obere und untere Kunststoffplatten bilden und am oberen und unteren Rand bei 13 bzw. 13' (Fig. 3) durch entsprechend gekrümmt verlaufende Seitenflächen im Übergang einstückig miteinander verbunden sind. Dabei steht im Bereich der vollständig offenen und daher die Einführung einer Kreditkarte, eines Ausweises o. dgl. ermöglichenden Einführöffnung 14 eine der beiden Kunststoffplatten, bei dem dargestellten Ausführungsbeispiel die untere Kunststoffplatte 12 um einen vorgegebenen Abstand A vor, so daß die Einführung erleichtert wird.

Am oberen Rand der in Fig. 1 gezeigten Kreditkarte ist noch ein Steg 15 angeordnet, der, falls gewünscht, auch langlochartige oder sonstige Durchbrechungen 16 tragen kann und damit Befestigungszwecken dient, beispielsweise Einheftung in eine fächerartig zu öffnende Tasche, wobei das Langloch der Durchführung eines Heftbandes und die beiden seitlich zu diesem angeordneten Rundlöcher der Einführung von Befestigungszapfen dienen können.

Ein wesentliches Merkmal vorliegender Erfindung besteht darin, daß gegenüberliegend zur vorderen Stirnseite der Schutzhülle 10 mit der Einführöffnung 14 auf der schmalen Rückseite 16 eine beispielsweise zentral angeordnete Öffnung 17 vorgesehen ist, die aber, wie es sich versteht, schmaler oder enger als die aufgenommene Scheckkarte oder Kreditkarte ist, so daß diese natürlich nicht nach hinten aus der Schutzhülle herausrutschen kann. Mit anderen Worten: auf der Rückseite 16 sind verbleibende Seitenwandflächen 16a, 16b vorgesehen, die die Öffnung 17 (mit tig) zwischen sich einschließen.

Diese Öffnung dient einem besonderen Zweck, auf den weiter unten in Verbindung mit einer Erläuterung des zur Herstellung einer solchen Schutzhülle verwendeten Spritzwerkzeugs noch genauer eingegangen wird und der kurz gesagt darin besteht, daß durch die Öffnung 17 eine mit dem den Aufnahmeraum für die Karte in der Schutzhülle 10 bildenden Schieber verbundene Zunge - beispielsweise eine einstückige Fortsetzung des Schiebers - durch diese Öffnung heraustreten und sich an geeigneter Stelle und in geeigneter Weise am Spritzwerkzeug selbst abstützen kann. Auf diese Weise ist der Schieber nämlich beidseitig, also von der Einführöffnung 14 aus gesehen selbstverständlich, da er von dort eingeführt ist, gehalten und zum anderen über seine aus der Öffnung 17 heraustretenden Zunge.

An dieser Stelle sei darauf hingewiesen, daß zwar an der Rückseite der aus der EP-PS 0 121 568 bekannt gewordenen Schutzhülle ebenfalls, allerdings sehr kleine Durchbrechungen vorgesehen sind, die jedoch in Form von Schlitzen ausdrücklich der Belüftung und Kühlung des Aufnahmeraums dann dienen, wenn der Schieber nach dem Erhärten des Kunststoffmaterials beim Spritzvorgang aus dem Aufnahmeraum wieder herausgezogen wird; die Funktion dieser rückwärtigen Belüftungsschlitze kann im übrigen auch durch die bei dieser Schutzhülle notwendigen Halteöffnungen übernommen werden, die wie weiter vorn schon erwähnt den Schieber im Aufnahmeraum abstützen und sich ja, wie in der genannten Veröffentlichung ausdrücklich beschrieben, über den gesamten Bereich der Schutzhülle erstrecken.

Eine vorteilhafte Ausgestaltung bei vorliegender Erfindung besteht noch darin, daß diese über eine Grifföffnung 18 verfügt, die etwa von der Mitte der Schutzhülle ausgehend und dabei beispielsweise etwa mittig der Schutzhüllenoberfläche plaziert, sich durchgehend bis zur Rückseite 16 erstreckt, so daß diese Grifföffnung 18 notwendigerweise in die zu ihr insofern senkrecht verlaufende Durchtrittsöffnung 17 für den Schieber übergeht.

Hierdurch ergibt sich ein besonderer Vorteil insbesondere auch für die Handhabung der Schutzhülle deshalb, weil man so durch die Grifföffnung 18 eine eingeführte Scheckkarte o. dgl. an ihrem hinteren Rand erfassen und problemlos verschieben kann, ohne daß man wie sonst bei einer rundum geschlossenen Grifföffnung notwendigerweise versuchen muß, durch eine entsprechende Druckausübung auf die Karte so viel Reibung zwischen ihr und beispielsweise dem Daumen zu erzeugen, daß die Karte verschoben werden kann, was natürlich gleichzeitig bedeutet, daß man die Karte auch mit einem entsprechenden Druck in die Schutzhülle wieder drückt, wo dann eine dem eigenen Bemühen entgegenwirkende Kraft durch die hierdurch hervorgerufene Gegenreibung erzeugt wird. Dies kann beispielsweise bei feuchten oder schwitzigen Fingern dazu führen, daß diese von der Oberfläche der immer sehr glatten Scheckkarten o. dgl. hilflos abrutschen und es nur sehr schwierig oder gar nicht gelingt, die Scheckkarte wieder aus der Hülle zu entfernen.

Bei der in Fig. 1 dargestellten Ausführungsform mit nach hinten offener Grifföffnung ergibt sich anstelle der sonst erforderlichen kraftschlüssigen Einwirkung die Möglichkeit, die Scheckkarte am hinteren Rand formschlüssig zu ergreifen und problemlos längs der Grifföffnung 18 so weit nach vorn zu schieben, bis deren Vorderteil aus der Einführöffnung 12 herausragt und dann an dieser Stelle ergriffen werden kann.

Eine weitere vorteilhafte Ausgestaltung der erfindungsgemäßen Scheckschutzhülle besteht schließlich noch darin, daß eine Bremse für die Sicherung der Scheckkarte in der Schutzhülle vorgesehen ist, die, wie für sich gesehen durchaus bekannt, aus einem U-förmigen Einschnitt 19 bei einer solchen Schutzhülle besteht, so daß ein entsprechender U-förmiger Materiallappen 20 stehen bleibt, der daher auch eine gewisse Elastizität bzw. Federeigenschaft senkrecht zur Zeichenebene entwickelt.

Da an dem U-förmigen Materiallappen mit Vorteil noch eine nach innen vorspringende Randzunge 20a angeordnet ist, die dann notwendigerweise den freien Aufnahmeraum geringfügig unter die Dicke des Scheckkartenformats verringert, ergibt sich an dieser Randseite eine Brems- und Reibungseinwirkung auf die Scheckkarte, so daß diese festgehalten wird. Man spürt diese Reibungseinwirkung im übrigen schon in dem Moment, in welchem die beim Einführen vordere Kante der Scheckkarte auf das vordere Ende der Nase 20a des Materiallappens 20 stößt, also an der mit B bezeichneten Position, so daß das weitere Einführen der Scheckkarte bewußt etwas schwergängiger erfolgt und man daher die Sicherheit erhält, daß die Scheckkarte in der Schutzhülle auch geführt und gesichert ist. Dies steht im Gegensatz zu einer Bremse, die angrenzend an die Rückseite 16 erst im letzten Moment die Scheckkarte erfaßt, so daß man nicht sicher ist, ob diese tatsächlich gehalten ist oder nicht.

Es versteht sich, daß die Schutzhülle auch so ausgebildet sein kann, daß sie in der Lage ist, beispielsweise zwei Kreditkarten oder Scheckkarten o. dgl. aufzunehmen, wobei dann mittlere Stege vorgesehen sein können zur sicheren Führung in getrennten Teilabteilen und wobei es dann sinnvoll ist, auch auf der anderen Seite der Schutzhülle noch eine Grifföffnung vorzusehen, beispielsweise versetzt gegenüber der Griffhülle 18 der Oberseite.

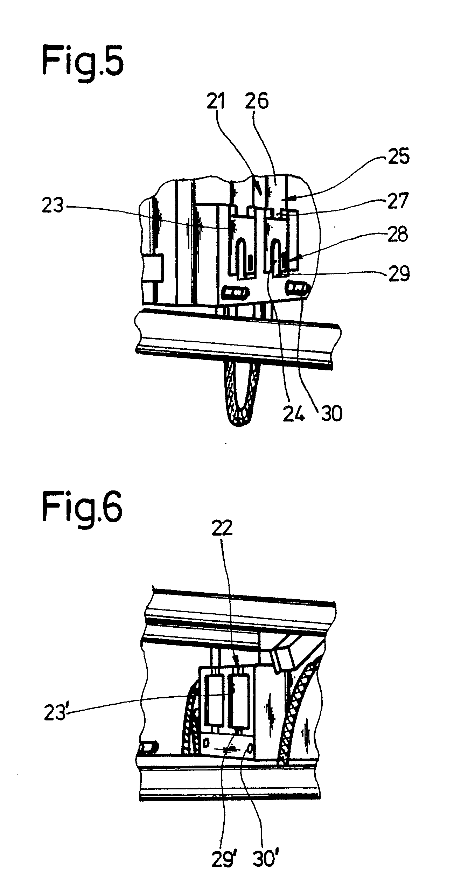

Zur Herstellung einer solchen Schutzhülle kann das erforderliche Spritzwerkzeug vergleichsweise einfach ausgebildet sein, wie in den Figuren 5 und 6 dargestellt; das Spritzwerkzeug ist zweiteilig ausgebildet, besteht also aus zwei Teilen, nämlich der in Fig. 5 gezeigten Grundform 21 und der die andere Spritzwerkzeughälfte bildenden, einfachen Deckform 22 entsprechend Fig. 6. Das dargestellte Spritzwerkzeug verfügt über zwei getrennte Formräume, so daß zwei Schutzhüllen jeweils bei einem Spritzvorgang gleichzeitig hergestellt werden können. Der Grundformraum 21 enthält neben der in diesem Fall viereckigen Vertiefung 23 die eine Art Kern bildende Erhöhung 24 für die Bildung der jeweiligen Grifföffnung sowie den Schiebermechanismus, der in der Zeichenebene der Fig. 5 von oben in den Formhohlraum einfährt und insgesamt mit 25 bezeichnet ist. Der Schiebermechanismus besteht aus dem eigentlichen Schieber 26 sowie der mit ihm einstückig verbundenen und insofern, nämlich auf den Spritzvorgang bezogenen vorderen Zunge 27, die vorzugsweise ein einstückiges Teil in Form einer schmaleren Verlängerung des Schiebers 26 selbst ist.

Ferner ist bei 28 noch die U-förmige Erhebung erkennbar, die in den Formhohlraum ebenfalls hineinragt und der Bildung des U-förmigen Materiallappens 20 für die Bremse dient.

Unterhalb des Formhohlraums und ausdrücklich außerhalb desselben befindet sich eine Aussparung 29, die der Aufnahme, Fixierung und festen Verankerung der Schieberzunge 27 dient, und zwar in Verbindung mit der anderen Formhälfte des Spritzwerkzeugs, wie in Fig. 6 dargestellt. Dieser Teil des Spritzwerkzeugs besteht im Grunde lediglich aus der anderen Formraumhälfte 23' mit einer entsprechenden Aussparung 29' im unteren Teil zur Fixierung der Schieberzunge. Der Spritzvorgang läuft dann problemlos so ab, daß zunächst der Schiebermechanismus 25 bei noch geöffneten Formhälften nach unten fährt, bis die Zunge 27 in die Aussparung 29 gelangt; anschließend fahren die beiden Formhälften aufeinander zu, wobei sich deren präzise Zuordnung und Fixierung durch vordere Positionierstifte 30 noch verbessern läßt, die in entsprechende Aufnahmeöffnungen 30' am jeweils anderen Formteil eingreifen. Es erfolgt dann der Spritzvorgang bei absolut unbeweglich und sicher gehaltenem Schieber 26, der im übrigen auch deshalb verkantungsfrei geführt ist, weil die Schieberzunge 27 eine vorgegebene Breitenerstreckung aufweist, die natürlich dann der Breite der Öffnung 17 der Schutzhülle entspricht. Der Schieber kann daher in seiner in den Formhohlraum eingefahrenen Position nicht wackeln oder seitlich versetzen; eine solche seitliche Versetzung wird durch die formschlüssige beidseitige Positionierung der Schieberzunge in der Aussparung 29 sicher verhindert.

Es wird darauf hingewiesen, daß die Erfindung selbstverständlich auch solche Schieberausführungen umfaßt, bei denen die Schieberzunge ebenfalls über den Formhohlraum hinausreicht, aber beispielsweise nicht an dessen vorderem Ende angeordnet ist, sondern, was ebenfalls möglich und daher innerhalb des erfindungsgemäßen Rahmens liegt, seitlich, vorzugsweise beidseitig seitlich, abgeht und dann an diesen Stellen sich über die Randbereiche des Formhohlraums erstreckt und dort eingespannt wird. Es kann in diesem Fall zwar erforderlich sein, dem Schieber bei seinem Einfahren in den Formhohlraum noch eine zusätzliche Bewegung zu verleihen, also zunächst axiales Einfahren und dann eine Heranfahrbewegung senkrecht hierzu an die betreffende Formhälfte, so daß dann die Schieberfortsetzungen oder -zungen in die entsprechenden Randaussparungen gelangen. Hierdurch ergeben sich in der Schutzhülle zwar dann seitliche Durchtrittsöffnungen für die Schieberzunge(n), die jedoch ebenfalls nicht störend sind, da sie auch nicht auffallen.

Alle in der Beschreibung, den nachfolgenden Ansprüchen und der Zeichnung dargestellten Merkmale können sowohl einzeln als auch in beliebiger Kombination miteinander erfindungswesentlich sein.

## Ansprüche

1. Flache Schutzhülle aus beidseitigen, einstückig miteinander verbundenen Kunststoffplatten zur Aufnahme mindestens einer Kreditkarte, Scheckkarte, Ausweiskarte, Automatenkarte u. dgl., auch solche mit Magnetstreifencode, mit einem Aufnahmeraum für die Karte, der an einer Stirnseite zur Ermöglichung der Karteneinführung völlig offen ist, ferner mit einer Grifföffnung in mindestens einer der Platten, dadurch gekennzeichnet, daß die Schutzhülle (10) bei Wegfall von über ihre Flächen verteilten Öffnungen mindestens eine weitere Randkantenöffnung aufweist zur Ermöglichung des Durchtritts einer Haltezunge als Teil eines den Aufnahmeraum beim Spritzvorgang ausfüllenden Schiebers des Spritzwerkzeugs zu dessen ausschließlicher Abstützung außerhalb der Schutzhülle.

2. Flache Schutzhülle nach Anspruch 1, dadurch gekennzeichnet, daß die mindestens eine Randkantenöffnung auf der zur Stirnseite gegenüberliegenden Rückseite (16) der Schutzhülle (10) mit im Vergleich zur Stirnseitenöffnung engerem Durchtrittsquerschnitt angeordnet ist.

3. Flache Schutzhülle nach Anspruch 1 und 2, dadurch gekennzeichnet, daß die rückseitige Öffnung (17) von beiden Seiten durch Rückwandflächen (16a, 16b) gegenüber der Stirnseitenöffnung (14) verengt ist.

4. Flache Schutzhülle nach Anspruch 1-3, dadurch gekennzeichnet, daß die in mindestens einer der Oberseite (11) bzw. Unterseite (12) bildenden Kunststoffplatten angeordnete Grifföffnung (18) so weit zum rückwärtigen Schutzhüllenende durchgezogen ist, daß sie in die Rückseitenöffnung (17) für die Schieberzungenaufnahme übergeht.

5. Flache Schutzhülle nach einem der Ansprüche 1-4, dadurch gekennzeichnet, daß eine Bremse in Form eines U-förmigen Materiallappens (20) auf mindestens einer der Schutzhüllenseiten (11, 12) so angeordnet ist, daß sich die mit einer vorspringenden Haltenase (20a) eine eingeführte Karte erfassende Randkante des die Bremse bildenden Materiallappens (20) längs und angrenzend zu einer Längskante der Schutzhülle erstreckt, so daß die eingeführte Karte beim Einführen an der Randkante des Materiallappens (20) entlang gleitet.

6. Verfahren zur Herstellung einer flachen Schutzhülle aus beidseitig einstückig miteinander verbundenen Kunststoffplatten nach einem oder mehreren der Ansprüche 1-5, dadurch gekennzeichnet, daß ein den Aufnahmeraum für die aufzunehmende Karte bildender Schieber (26) mit einem (vorderen) zungenförmigen (einstückigen) Endbereich (27) zu seiner sicheren Fixierung im Formhohlraum des Spritzwerkzeugs außerhalb des Formhohlraums von diesen umgebenden Randbereichen des Spritzwerkzeugs fixiert wird.

7. Verfahren nach Anspruch 6, dadurch gekennzeichnet, daß die mit dem Schieber (26) einstückige, seiner genauen Positionierung dienende Zunge (27) gegenüberliegend dem Schieberbetätigungsbereich in eine Ausnehmung (29, 29') des Formwerkzeugs einfährt und dort gehalten wird.

8. Verfahren nach Anspruch 6 oder 7, dadurch gekennzeichnet, daß bei zweiteiliger Ausbildung des Formhohlraums für die Schutzhülle mit einem ersten Grundformraum mit einer zentralen, an die Formhohlrauminnenwand anstoßenden Erhebung zur Bildung der Grifföffnung und der sich an diese anschließenden Aussparung (29) mit gegenüberliegender Aussparung (29') das feste Zentrieren des Schiebers (26) durch das Einspannen seiner vorderen einstückigen Zunge (27) beim Zusammenfahren der beiden Formhälften (21, 22) erfolgt.

9. Vorrichtung zur Durchführung des Verfahrens nach einem der Ansprüche 6-8 zur Herstellung einer flachen Schutzhülle aus beidseitigen, einstückig miteinander verbundenen Kunststoffplatten zur Aufnahme mindestens einer Scheckkarte o. dgl., bestehend aus einem Formhohlraum mit einem in diesen seitlich einfahrbaren Schieber zur Bildung des Aufnahmeraums der Schutzhülle, dadurch gekennzeichnet, daß der Schieber mindestens eine (vordere) zugenförmige Erstreckung aufweist, die sich bei voll eingefahrenem Schieber außerhalb des Formhohlraums befindet und von mindestens einer Aussparung im Randbereich der beiden Formhälften aufgenommen und fixiert ist derart, daß der Schieber (26) beidseitig verkantungs- und verschiebungsfrei gehalten ist.

10. Vorrichtung nach Anspruch 9, dadurch gekennzeichnet, daß zwei Formhälften (21, 22) vorgesehen sind, die dort, wo die Schieberzunge (27) zu dessen Fixierung über den Formraumrandbereich hinausragt, Aussparungen (29, 29') aufweisen zur festen Aufnahme und Einspannung der Schieberzunge dann, wenn die beiden Formhälften (21, 22) zur Durchführung des Spritzvorgangs aufeinander zufahren.

Fig.1   Fig.2   Fig.3   Fig.4

# Fig.5

# Fig.6

| EINSCHLÄGIGE DOKUMENTE | | | EP 90114119.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| D,X | EP - B1 - 0 121 598 (RITTER) * Fig. 2,6,8 * -- | 1,2,3, 5 | A 45 C 11/18 |
| A | DE - A1 - 3 718 259 (S. FRANZEN SÖHNE GMBH) * Fig. 5,8 * -- | 5 | |
| D,A | US - A - 4 141 400 (MANGAN) * Fig. 3 * ---- | 5 | |

| RECHERCHIERTE SACHGEBIETE (Int. Cl.⁵) |
|---|
| A 45 C 11/00 |

Der vorliegende Recherchenbericht wurde für alle Patentansprüche erstellt.

| Recherchenort WIEN | Abschlußdatum der Recherche 22-10-1990 | Prüfer KAMMERER |
|---|---|---|